# EUROPÄISCHE PATENTSCHRIFT

(11) **EP 0 443 128 B1**
(45) Veröffentlichungstag und Bekanntmachung des Hinweises auf die Patenterteilung: **13.10.1993**
(21) Anmeldenummer: 90123623.2
(22) Anmeldetag: 08.12.1990
(51) Int. Cl.: B62D 43/04

(54) **Transport- und Haltevorrichtung für ein Fahrzeugersatzrad**
Transport and suspension device for a spare wheel of a vehicle
Dispositif de transport et de suspension pour une roue de secours de véhicule

(30) Priorität: 10.02.1990 DE 4004041
(43) Veröffentlichungstag der Anmeldung: 28.08.1991
(73) Patentinhaber: MERCEDES-BENZ AG, 70327 Stuttgart (DE)
(72) Erfinder: Vollmer, Meinrad, W-7407 Rottenburg (DE); Knapp, Jost, W-7032 Sindelfingen (DE)

(56) Entgegenhaltungen:
- EP-A- 0 114 147
- BE-A- 534 907
- DE-A- 3 118 504
- US-A- 2 034 834

## Beschreibung

Die Erfindung betrifft eine Transport- und Haltevorrichtung für ein Fahrzeugersatzrad nach dem Oberbegriff des Anspruchs 1.

In der gattungsgemäßen DE-A-31 18 504 ist ein Radkorb für ein Ersatzrad beschrieben, der Aufhängemittel zum Einhängen des Radkorbes in eine unterhalb einer Fahrzeugkarosserie angeordnete Aufnahme besitzt, die auch dazu dienen, daß der Radkorb mit dem Ersatzrad in die Horizontale hochschwenkbar und anschließend an der Fahrzeugkarosserie festlegbar ist. Um diesen Vorgang bei einem schweren Ersatzrad, wie für einen Bus oder LKW vornehmen zu können, müssen die Aufhängemittel etwa mittig der Seitenlänge des Radkorbs angeordnet sein, damit das Gewicht von Radkorb und Ersatzrad die Schwenkbewegung nicht erschweren. Die Aufnahme muß gut zugänglich von der Fahrzeugkarosserie abkragen, wodurch aber der hochgeschwenkte Radkorb eventuell sogar über den Fahrzeugaufbau hinausragt. Zudem müßte ein Bus, dessen Verkleidungsteile weit gegen die Fahrbahn gezogen sind, eine große Öffnung aufweisen, durch die eine vertieft liegende Aufnahme zugänglich und eine Schwenkbewegung des Radkorbs möglich wäre.

Da die Belastung bei der Bewegung eines derart schweren Ersatzrades für den Monteur sehr hoch sein kann, aber bei zahlreichen Fahrzeugen ein entfernt vom Fahrzeugumriß liegender Stauraum für das Ersatzrad nur schwer zu erreichen ist, ist in der DE-A-27 25 611 eine angetriebene Vorrichtung beschrieben, die ein Ersatzrad automatisch verschiebt und verschwenkt. Durch die dafür notwendige Anhängung eines Radhalters des Ersatzrades mit nur einer Seite an der Vorrichtung muß das Gewicht des Ersatzrades vollständig in dessen einem Schwenklager abgestützt und durch den Antrieb bewegt werden. Eine derartige Vorrichtung kann also für eine manuelle Schwenkbewegung des Ersatzrades nicht verwendet werden, und ist in ihrer Einsatzmöglichkeit durch ihren Einbauraumbedarf über die gesamte Bewegungsstrecke des Ersatzrades und aufgrund der schwergewichtigen Bauweise bei schweren Ersatzrädern nur auf kleine und leichtere Ersatzräder beschränkt.

Der Erfindung liegt die Aufgabe zugrunde, eine gattungsgemäße Transport- und Haltevorrichtung für ein Fahrzeugersatzrad derart auszugestalten, daß das Ersatzrad mit geringem Kraftaufwand manuell entlang des Fahrzeugbodens aus einer fahrzeugaußenseitigen Position in eine Transportposition fest am Fahrzeug und wieder zurück bewegbar ist.

Die Aufgabe wird durch die kennzeichnenden Merkmale des Anspruchs 1 gelöst.

Der Radkorb mit dem Ersatzrad ist durch die seitlich angeordneten Führungsrollen leicht entlang der Führungsschienen zu verschieben.
Dabei ist eine in Seitenansicht zentrale Anordnung zweier Führungsrollen, die der Einhängung des Radkorbes in Führungsschienen dienen, besonders vorteilhaft, da sich das schwere Ersatzrad, das nun etwa im Schwerpunkt abgestützt ist, ohne großen Kraftaufwand in eine horizontale Position verschwenken lässt. Diese Lage behält das Ersatzrad durch die weitere Abstützung des Radkorbs mit den peripher fahrzeugseitig an diesem angeordneten Führungsrollen bei, die durch ihnen zugeordnete Führungsschienen gestützt werden. Dieser Mechanismus ist nur dann vorteilhaft in verschiedenartigen Bodengruppen von Fahrzeugen mit großvolumigen Fahrzeugrädern einsetzbar, wenn ein Einhängen der zentralen Führungsrollen am Radkorb vor der Fahrzeugaußenkontur möglich ist, da ansonsten ein derart schwergewichtiges Fahrzeugrad nur wiederum umständlich bzw. unter größerer Belastung des Montierenden zu handhaben wäre. Für einen leichtgängigen Verschiebevorgang ist ein horizontaler Verlauf der Führungsschienen optimal. Auch wird eine klapperfreie und kippsichere Lagerung des Radkorbes durch eine entsprechende Querschnittsausbildung der Führungsschienen erreicht.

Es kann vorgesehen sein, daß alle Führungsrollen in oder auf den Führungsschienen rollen, es ist aber auch eine Ausbildung der Vorrichtung möglich, in der die peripheren Führungsrollen unterhalb ihrer Führungsschienen entlangbewegt werden, wenn der Schwerpunkt des Radkorbs mit dem Ersatzrad in Fahrzeugfrontrichtung vor den zentralen Führungsrollen liegt.

Da der Radkorb in seiner unter den Fahrzeugaufbau verschobenen Stellung zur Sicherheit verrastet werden sollte, dies aber für den Montierenden möglichst wenig Aufwand erfordern soll, zeigt sich eine Vorrichtung am Radkorb in Form von Auflaufkeilen als vorteilhaft, mit denen der Radkorb am Ende seines maximalen Einschubwegs in Karosserieaufnahmeschlitze reib-und/oder formschlüssig einfahrbar ist, wonach der Radkorb festliegt.

Die mit den vier Führungsrollen ausgestattete Haltevorrichtung ist durch einen Handgriff, der gegenüberliegend eines in der Nähe der peripheren Führungsrollen angeordneten Transportrads gelagert ist, in einfacher Weise zu einer Transportvorrichtung ergänzt, die es nach dem Herabschwenken des Radkorbs aus seiner horizontalen Position ermöglicht, daß das schwere Ersatzrad auf dem Transportrad aufgesetzt, außerhalb der Fahrzeugkarosserie aus den vorderen Führungsschienen ausgehängt und mittels des Handgriffs vom Fahrzeug weg transportiert werden kann. Dieser Vorgang funktioniert sogar dann, wenn die Führungsschienen in einem Karosseriekasten angeordnet sind, der einen Raum bildet, in dem der Radkorb mit dem Ersatzrad zumindest oben und seitlich überdeckt und gegen Verschmutzung und Beschädigung geschützt ist. Selbst wenn dieser Raum gegen die Fahrbahn hin verkleidet sein sollte, kann das Ersatzrad durch die vor die Fahrzeugfront verlängerbaren Führungsschienen in seiner Transport- und Haltevorrichtung wie beschrieben geschwenkt werden.

Die Gegenstände der weiteren Patentansprüche bilden vorteilhafte Ausgestaltungsmöglichkeiten der Gegenstände vorherstehender Ansprüche.

Zwei Ausführungsbeispiele der Erfindung sind in der Zeichnung dargestellt.

Es zeigen:
- Fig. 1: in Seitenansicht eine Transport- und Haltevorrichtung mit vor dem Fahrzeug aufgesetztem Ersatzrad-Radkorb,
- Fig. 2: den Radkorb in horizontal hochgeschwenkter und dabei in die Halteposition eingefahrener Stellung,
- Fig. 3: eine Draufsicht von Fig. 2,
- Fig. 4: eine geschnittene Ansicht der Führungsschienen auf einer Seite entlang der Linie IV - IV in Fig.3,
- Fig. 5: in Seitenansicht die Verrastung des Radkorbes in maximaler Einschubposition, und
- Fig. 6: in Seitenansicht eine weitere Ausführungsform der Transport- und Haltevorrichtung in drei Positionen, mit einseitig aufgesetztem und mit hochgeschwenktem Ersatzrad-Radkorb.

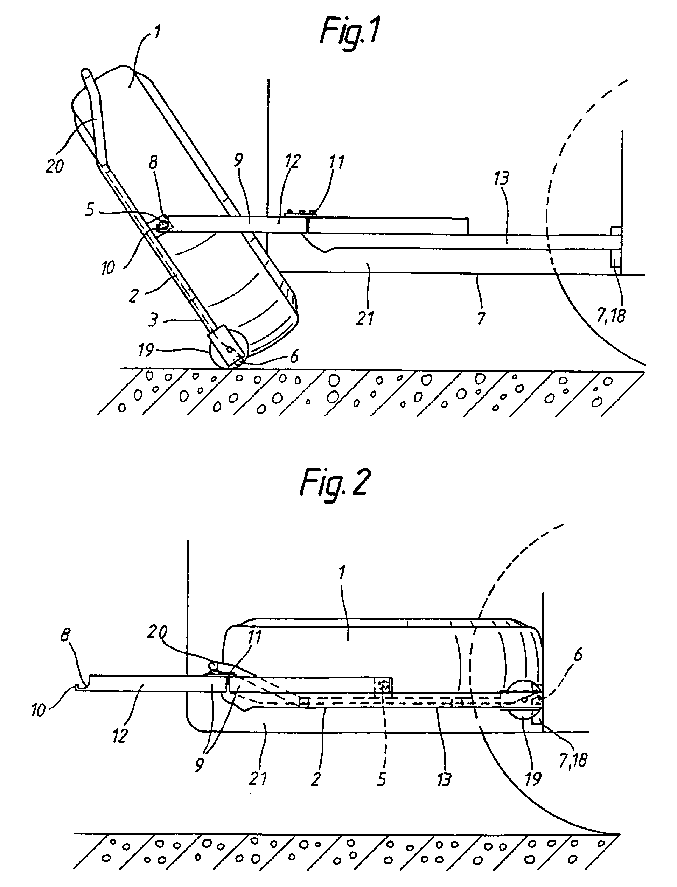

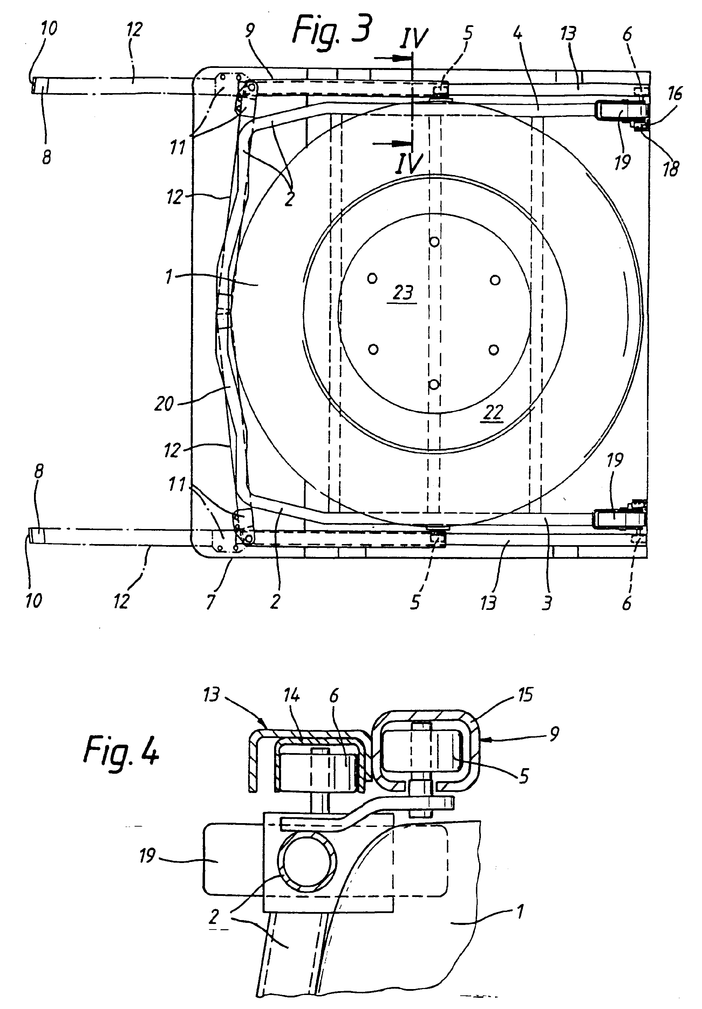

Die Figuren 1 bis 3 zeigen eine Transport- und Haltevorrichtung für ein Fahrzeugersatzrad 1, das in einem Radkorb 2 aufgenommen und zu seiner Festlegung z.B. damit verschraubt ist. Der Radkorb 2, der hier aus verschweißten, ein Quadrat bildenden Rohrstücken gefertigt ist, weist an seinen Seitenteilen 3, 4 beidseitig jeweils zwei Führungsrollen 5 und 6 auf, wovon eine in Seitenansicht zentral und die andere peripher fahrzeugseitig mit gleicher Ausrichtung am Radkorb 2 angeordnet ist, wenn der Radkorb 2 mit dem Ersatzrad 1 aus einer neben dem Fahrzeug aufgesetzten Stellung in eine horizontale Lage an einer Fahrzeugkarosserie 7 hochgeschwenkt ist. Um dies zu erreichen, wird der Radkorb 2 mit seinen zentralen Führungsrollen 5, in jeweils eine Aufnahme 8 eingehängt, welche im Endbereich zweier Führungsschienen 9 ausgebildet sind, die im Abstand der beidseitigen Führungsrollen 5 bzw. 6 an der Fahrzeugkarosserie 7 parallel zueinander verlaufend auf gleicher Höhe festgelegt sind. Diese Führungsschienen 9 beginnen vor der Außenkontur der Fahrzeugkarosserie 7, wodurch die Einhängung der zentralen Führungsrollen 5 in die Aufnahme 8 erleichtert ist und weisen nach vorne einen Anschlag 10 auf, der ein ungewolltes Herausrollen der zentralen Führungsrollen 5 aus ihren Führungsschienen 9 verhindert. Außerdem sind diese Führungsschienen 9 innerhalb der Fahrzeugaußenkontur jeweils durch ein Scharnier 11 unterteilt, welche ein Hereinklappen der vorderen Führungsschienenteile 12 gegeneinander zur Fahrzeugmitte hin gestatten. Die peripheren Führungsrollen 6 werden nach dem Hochschwenken des Radkorbs 2 in eine etwa horizontale Lage in zwei weitere beidseitige Führungsschienen 13 eingefahren, die im Abstand dieser Führungsrollen 6 parallel zueinander entlang einer Fahrzeuglängsachse ausgerichtet an der Fahrzeugkarosserie 7 festgelegt sind, so daß der Radkorb 2 mit dem Ersatzrad 1 in seiner horizontalen Lage durch die vorderen Führungsschienen 9 und durch die hinteren Führungsschienen 13 abgestützt liegt. Damit der schwere Radkorb 2 mit dem massigen Ersatzrad 1 eine ausreichend stabile Lagerung ohne geräuschvolle Vibrationsmöglichkeiten erhält, sind die Führungsschienen 9 und 13, wie Fig. 4 zeigt, mit einem geschlitzten Vierkant-Querschnitt 15 bzw. mit einem seitwärts gekippten U-Querschnitt 14 ausgeführt, durch die das Ersatzrad 1 auch bei einem Fahrzeugaufprall sicher in seiner Position gehalten ist.

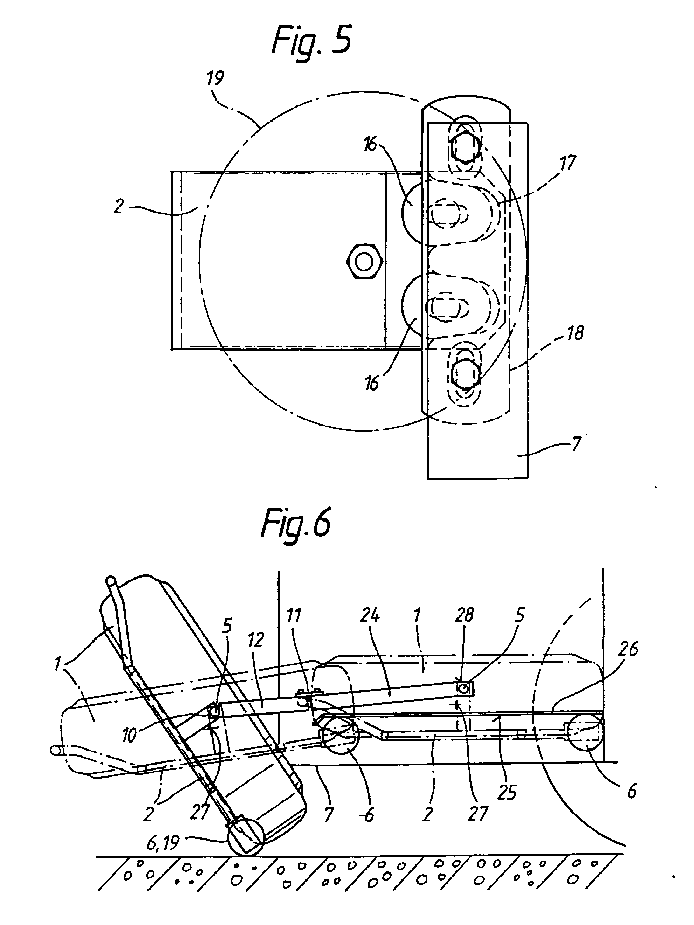

Dazu trägt auch bei, daß am Radkorb 2, wie in Fig. 5 näher dargestellt, Auflaufkeile 16 festgelegt sind, mit denen der Radkorb 2 bei maximalem Einschubweg entlang der Führungsschienen 13 an Karosserieaufnahmeschlitzen 17, die in einem dort durch Schrauben festgelegten Stanzblech 18 eingeformt sind, reibschlüssig verrastbar ist.

Durch diese Transport- und Haltevorrichtung ist das Ersatzrad 1 mit geringem Kraftaufwand manuell entlang des Bodens der Fahrzeugkarosserie 7 aus einer Lagerstelle am Fahrzeug in eine fahrzeugaußenseitige Transportposition und wieder zurück bewegbar, selbst wenn die Führungsschienen 9 und 13 in einem Karosseriekasten 21 angeordnet sind, der auch den Radkorb 2 mit dem Ersatzrad 1 zumindest oben und seitlich überdeckt.

Zur besseren Handhabung des neben dem Fahrzeug am Boden aufgesetzten Radkorbs 2 mit dem Ersatzrad 1, welches ja gegen ein am Fahrzeug kaputt gegangenes Rad ausgewechselt werden soll, kann sich nahe der peripheren Führungsrollen 6 am Radkorb 2 ein Transportrad 19 und über die Radkorbmitte gegenüberliegend ein Handgriff 20 befinden. Allerdings ist es bei entsprechender Ausbildung der Führungsrollen 6 auch möglich, den Radkorb 2 gleich auf diesen fortzubewegen.

Ebenso wie es sich anbietet, das Ersatzrad 1 mit seiner Felge 22 auf dem Radkorb 2 festzulegen, so ist es auch vorteilhaft, einen nach oben offenen, zentralen Felgenhohlraum 23 für die Unterbringung von Montagewerkzeug zu nutzen.

In einer weiteren Ausführungsform, die in Fig. 6 dargestellt ist, werden die zentralen Führungsrollen 5 des Radkorbs entlang einer beidseitig von der Fahrzeugfront gegen die Fahrzeugmitte ansteigenden Führungsschiene 24 aufgenommen, während die peripheren Führungsrollen 6 an der Unterseite 25 einer jeweils für sie bestimmten Führungsschiene 26 entlangrollen. Dies ist dadurch mit wenig Kraftaufwand möglich, weil der Schwerpunkt 27 des Radkorbs 2 mit dem Ersatzrad 2 in Fahrzeugfrontrichtung vor den zentralen Führungsrollen 5 liegt, so daß der Radkorb 2 leicht aus seiner am Boden vor dem Fahrzeug aufgestellten Stellung in seine horizontale Lage kippt und darin durch die Schwerpunktslage des Radkorbs 2 gehalten bleibt. Es bietet sich dabei an, einen innenliegenden Endbereich 28 der vorderen Führungsschienen 24 horizontal auslaufen zu lassen, damit der Radkorb 2 in Fahrzeuglängsrichtung horizontal abgestützt ist.

## Patentansprüche

1. Transport- und Haltevorrichtung für ein Fahrzeugersatzrad, die einen das Ersatzrad aufnehmenden Radkorb umfaßt, welcher an Seitenteilen beidseitig, in Seitenansicht zentral, eine Einhängevorrichtung aufweist, mit der der Radkorb in eine fahrzeugseitige Aufnahme lösbar einhängbar ist, wobei peripher fahrzeugseitig beidseitig am Radkorb (2) peripheren Führungsrollen (6) gelagert sind, wonach der Radkorb mit dem Ersatzrad aus einer außerhalb des Fahrzeugs aufgesetzten Stellung in eine horizontale Lage hochschwenkbar ist,
**dadurch gekennzeichnet,**
daß die Einhängevorrichtung durch zentrale Führungsrollen (5) gebildet ist, die durch die gleichgerichtete, peripheren Führungsrollen (6) ergänzt sind, und daß die Aufnahme am Fahrzeug durch zwei parallele Führungsschienen (9 bzw. 24), die vor die Fahrzeugkarosserie (7) herausbewegbar sind, für die zentralen Führungsrollen (5) und durch weitere beidseitige Führungsschienen (13 bzw. 26) für die peripheren Führungsrollen (6) gebildet ist, wobei die Führungsschienen (9 bzw. 24) für die zentralen Führungsrollen (5) jeweils durch ein Scharnier (11) unterteilt sind, die ein Hereinklappen der vorderen Führungsschienenteile (12) gegeneinander zur Fahrzeugmitte hin gestatten.

2. Transport- und Haltevorrichtung nach Anspruch 1,
**dadurch gekennzeichnet,**
daß die Führungsschienen (9 und 13) in Seitenansicht horizontal verlaufen.

3. Transport- und Haltevorrichtung nach einem der Ansprüche 1 oder 2,
**dadurch gekennzeichnet,**
daß die Führungsschienen (9) für die zentralen Führungsrollen (5) einen gegeneinander offenen, geschlitzten Vierkant-Querschnitt (15), und die Führungsschienen (13) für die peripheren Führungsrollen (6) einen gegeneinander offenen, U-Querschnitt (14) aufweisen.

4. Transport- und Haltevorrichtung nach einem der Ansprüche 1 oder 2,
**dadurch gekennzeichnet,**
daß die peripheren Führungsrollen (6) an der Unterseite (25) ihrer Führungsschienen (26) entlangbewegbar sind, und daß der Schwerpunkt (27) des Radkorbs (2) mit dem Ersatzrad (1) in Fahrzeugfrontrichtung vor den zentralen Führungsrollen (5) liegt.

5. Transport- und Haltevorrichtung nach Anspruch 1,
**dadurch gekennzeichnet,**
daß die Führungsschienen (9 bzw. 24) für die zentralen Führungsrollen (5) an ihrem vor der Fahrzeugkarosserie (7) liegenden Ende durch einen Anschlag (10) begrenzt sind.

6. Transport- und Haltevorrichtung nach Anspruch 1,
**dadurch gekennzeichnet,**
daß am Radkorb (2) Auflaufkeile (16) festgelegt sind, mit denen der Radkorb (2) bei maximalem Einschubweg entlang der Führungsschienen (13) an Karosserieaufnahmeschlitzen (17) reib- und/ oder formschlüssig verrastbar ist.

7. Transport- und Haltevorrichtung nach Anspruch 1,
**dadurch gekennzeichnet,**
daß die Führungsschienen (9 bzw. 24 und 13 bzw. 26) in einem Karosseriekasten (21) angeordnet sind, der den Radkorb (2) zumindest oben und seitlich überdeckt.

8. Transport- und Haltevorrichtung nach Anspruch 1,
**dadurch gekennzeichnet,**
daß nahe der peripheren Führungsrollen (6) am Radkorb (2) ein Transportrad (19) und über die Radkorbmitte gegenüberliegend ein Handgriff (20) gelagert ist.

9. Transport- und Haltevorrichtung nach Anspruch 8,
**dadurch gekennzeichnet,**
daß das Transportrad (19) durch die peripheren Führungsrollen (6) gebildet ist.

10. Transport- und Haltevorrichtung nach Anspruch 1,
**dadurch gekennzeichnet,**
daß eine Felge (22) des Ersatzrades (1) auf dem Radkorb (2) lösbar befestigbar ist.

11. Transport- und Haltvorrichtung nach einem der Ansprüche 10 oder 1,
**dadurch gekennzeichnet,**
daß ein zentraler Felgenhohlraum (23) des Ersatzrades (1) für die Unterbringung von Werkzeug zugänglich ist.

## Claims

1. A device for transporting and supporting a spare wheel for a vehicle and comprising a wheel basket for accommodating the spare wheel and having on both sides, on side parts, centrally in side view, a suspension device by which the wheel basket can be removably suspended in a housing provided in the vehicle, whereby peripherally on both sides of the vehicle, peripheral guide rollers (6) are mounted on the wheel basket (2), whereupon the wheel basket together with the spare wheel can be pivoted upwardly out of its position outside the vehicle and into a horizontal position, characterised in that the suspension device consists of central guide rollers (5) which are supplemented by the equiaxial peripheral guide rollers (6), and in that the housing on the vehicle is constituted by two parallel guide rails (9, 24) adapted to be moved out in front of the vehicle bodywork (7) for the central guide rollers (5) and by further guide rails (13, 26) on both sides for the peripheral guide rollers (6), the guide rails (9, 24) for the central guide rollers (5) being divided by respective hinges (11) which make it possible for the front guide rail parts (12) to be folded towards each other and towards the middle of the vehicle.

2. A transporting and supporting device according to Claim 1, characterised in that in side view, the guide rails (9 and 13) extend horizontally.

3. A transporting and supporting device according to one of Claims 1 or 2, characterised in that the guide rails (9) for the central guide rollers (5) are open towards each other and have a slotted square cross-section (15) and in that the guide rails (13) for the peripheral guide rollers (6) are open towards each other and are of U-shaped cross-section (14).

4. A transporting and supporting device according to one of Claims 1 or 2, characterised in that the peripheral guide rollers (6) are adapted for movement along the underside (25) of their guide rails (26) and in that the centre of gravity (27) of the wheel basket (2) together with the spare wheel (1) is disposed in front of the central guide rollers (5) as seen in the direction of the front of the vehicle.

5. A transporting and supporting device according to Claim 1, characterised in that the guide rails (9, 24) for the central guide rollers (5) are bounded by an abutment (10) at their end which is in front of the vehicle bodywork (7).

6. A transporting and supporting device according to Claim 1, characterised in that fixed to the wheel basket (2) are wedge-shaped ramps (16) by which the wheel basket (2) can be frictionally and/or positively locked on receiving slots (17) on the bodywork when the wheel basket (2) has been pushed in by the maximum amount along the guide rails (13).

7. A transporting and supporting device according to Claim 1, characterised in that the guide rails (9, 24 and 13, 26) are disposed in a box (21) on the bodywork, which covers the wheel basket (2) at least at the top and sides.

8. A transporting and supporting device according to Claim 1, characterised in that a jockey wheel (19) is mounted on the wheel basket (2), close to the peripheral guide rollers (6) while opposite the wheel (19), across the centre of the wheel basket, there is a handle (20).

9. A transporting and supporting device according to Claim 8, characterised in that the jockey wheel (19) is formed by the peripheral guide rollers (6).

10. A transporting and supporting device according to Claim 1, characterised in that a rim (22) of the spare wheel (1) can be separably fixed to the wheel basket (2).

11. A transporting and supporting device according to one of Claims 10 or 1, characterised in that a central rim cavity (23) on the spare wheel (1) is accessible to accommodate tools.

## Revendications

1. Dispositif de transport et maintien pour une roue de secours de véhicule, qui est pourvu d'un panier recevant la roue de secours, qui comporte dans des parties latérales, des deux côtés et centralement en vue en élévation latérale, un dispositif de suspension au moyen duquel le panier peut être suspendu de façon séparable dans un réceptacle situé côté véhicule, des galets périphériques de guidage (6) étant montés, du côté du véhicule, de part et d'autre sur le pourtour du panier (2), ce panier comportant la roue de secours pouvant être déplacé par pivotement vers le haut depuis une position d'appui située à l'extérieur du véhicule jusque dans une position horizontale, caractérisé en ce que le dispositif de suspension est constitué par des galets centraux de guidage (5), qui sont complétés par les galets périphériques de guidage (6) de même orientation, et en ce que le réceptacle prévu sur le véhicule est constitué par deux barres parallèles de guidage (9 ; 24), qui peuvent être sorties jusqu'en avant de la carrosserie (7) du véhicule, pour les galets centraux de guidage (5) ainsi que par d'autres barres de guidage (13 ; 26) prévues de chaque côté pour les galets périphériques de guidage (6), les barres de guidage (9 ; 24) pour les galets centraux de guidage (5) étant divisées chacune par une charnière (11), ces charnières permettant un rabattement des parties avant (12) des barres de guidage l'une vers l'autre en direction du milieu du véhicule.

2. Dispositif de transport et maintien selon la revendication 1, caractérisé en ce que les barres de guidage (9 et 13 ) sont orientées horizontalement, en vue en élévation latérale.

3. Dispositif de transport et maintien selon une des revendications 1 ou 2, caractérisé en ce que les barres de guidage (9) pour les galets centraux de guidage (5) ont respectivement des sections quatre-pans (15) pourvues de fentes ouvertes l'une vers l'autre, et les barres de guidage (13) pour les galets périphériques de guidage (6) ont respectivement des sections en U (14) ouvertes l'une vers l'autre.

4. Dispositif de transport et maintien selon une des revendications 1 ou 2, caractérisé en ce que les galets périphériques de guidage (6) sont déplaçables le long du côté inférieur (25) de leurs barres de guidage (26) et en ce que le centre de gravité (27) du panier (2) pourvu de la roue de secours (1) est situé, en considérant la direction avant du véhicule, en avant des galets centraux de guidage (5).

5. Dispositif de transport et maintien selon la revendication 1, caractérisé en ce que les barres de guidage (9 ; 24) pour les galets centraux de guidage (5) sont limitées, à leur extrémité située en avant de la carrosserie (7) du véhicule, par une butée (10).

6. Dispositif de transport et maintien selon la revendication 1, caractérisé en ce que sur le panier à roue (2) sont fixés des coins d'entrée (16) à l'aide desquels le panier (2) peut, pour la course maximale de déplacement le long des barres de guidage (13), être fixé par complémentarité de frottement et/ou de forme, dans des fentes réceptrices (17) de la carrosserie.

7. Dispositif de transport et maintien selon la revendication 1, caractérisé en ce que les barres de guidage (9 ; 24 et 13 ; 26) sont disposées dans un caisson (21) de la carrosserie, qui recouvre le panier à roue (2) au moins en haut et latéralement.

8. Dispositif de transport et maintien selon la revendication 1, caractérisé en ce qu'il est prévu à proximité des galets périphériques de guidage (6), sur le panier à roue (2), une roulette de transport (19) et, dans une position opposée et au-dessus du milieu du panier, une poignée de manoeuvre (20).

9. Dispositif de transport et maintien selon la revendication 8, caractérisé en ce que la roulette de transport (19) est constituée par les galets périphériques de guidage (6).

10. Dispositif de transport et maintien selon la revendication 1, caractérisé en ce qu'une jante (22) de la roue de secours (1) peut être fixée de façon sépararable sur le panier (2).

11. Dispositif de transport et maintien selon une des revendications 10 ou 1, caractérisé en ce qu'une cavité centrale (23) de la jante de la roue de secours (1) est accessible pour la mise en place d'un outil.
